# NEUE EUROPÄISCHE PATENTSCHRIFT

(11) **EP 0 886 780 B2**
(45) Veröffentlichungstag und Bekanntmachung des Hinweises auf die Entscheidung über den Einspruch: **26.05.2010**
(45) Hinweis auf die Patenterteilung: 06.06.2001
(21) Anmeldenummer: 97917223.6
(22) Anmeldetag: 06.02.1997
(51) Int. Cl.: G01N 35/00, G01N 1/30

(54) **TRANSPORTVORRICHTUNG FÜR PROBENHALTER MIT MEDIZINISCHEN PRÄPARATEN**
TRANSPORT DEVICE FOR SAMPLE HOLDERS WITH MEDICAL SPECIMENS
DISPOSITIF DE TRANSPORT POUR PORTE-ECHANTILLONS CONTENANT DES ECHANTILLONS MEDICAUX

(30) Priorität: 17.02.1996 DE 19605977
(43) Veröffentlichungstag der Anmeldung: 30.12.1998
(73) Patentinhaber: Gold-Becker, Helmut, 30916 Isernhagen (DE)
(72) Erfinder: STILLER, Bernd, D-30459 Hannover (DE)
(74) Vertreter: Körner, Peter
(86) Internationale Anmeldenummer: PCT/DE1997/000270
(87) Internationale Veröffentlichungsnummer: WO 1997/030355

(56) Entgegenhaltungen:
- DE-A- 1 923 810
- DE-C- 4 117 833

## Beschreibung

Die Erfindung betrifft eine Transportvorrichtung für Probenhalter mit medizinischen Präparaten nach dem Oberbegriff des Anspruchs 1.

Aus der DE 41 17 833 C2 ist eine Vorrichtung zur Färbung von auf Objektträgern angeordneten histologischen Präparaten bekannt. Bei dieser Vorrichtung ist eine matrixförmige Anordnung von Behandlungsstationen vorgesehen, die über eine dreiachsige Steuerung angefahren werden können. Dabei können gleichzeitig mehrere Behandlungsvorgänge auch mit unterschiedlichen Färbeprogrammen parallel durchgeführt werden.

Um eine Kontamination der Behandlungsstationen mit Behandlungsreagenzien anderer Behandlungsstationen zu vermeiden, werden die Objektträgerhalter nach Verlassen einer Behandlungsstation mit flüssigen Reagenzien über eine separate Abtropfzone zur nächsten Behandlungsstation transportiert. Diese Abtropfzone ist als wasserführende Kammer zwischen zwei parallelen Reihen mit Behandlungsstationen angeordnet. Dadurch kann die zum Abtropfen ohnehin benötigte Zeit für den Transport ausgenutzt werden.

Allerdings beschränkt der von der Abtropfzone benötigte Platz die Unterbringungsmöglichkeit weiterer Behandlungsstationen bei gleicher Grundfläche.

Aus der gattungsbildenden US 3,976,028 ist eine Behandlungsvorrichtung für histologische Präparate mit Behandlungsstationen und die Aus einer Transportvorrichtung für Probenhalter weiche bekannt. Hierbei sind Färbebehälter mit Reagenzien in mehreren Reihen übereinander gestapelt. Ein Probenhalter ist mittels einer Transportvorrichtung neben den Reihen mit Färbebehältern verfahrbar. Unter dem Probenhalter befindet sich ein Waschtank mit Spülflüssigkeit. In horizontaler Richtung können der Probenhalter und der Waschtank mittels der Transportvorrichtung stets nur gemeinsam verfahren werden.

Der Erfindung liegt die Aufgabe zugrunde, eine Transportvorrichtung für Probenhalter mit medizinischen Präparaten dahingehend zu verbessern, daß eine Kontamination der Behandlungsstationen mit Behandlungsreagenzien anderer Behandlungsstationen ohne separate Abtropfzone verhindert wird.

Die Aufgabe wird bei einer Transportvorrichtung nach dem Oberbegriff des Anspruchs 1 durch die in seinem Kennzeichen angegebenen Merkmale gelöst.

Weiterbildungen und vorteilhafte Ausgestaltungen ergeben sich aus den Unteransprüchen.

Bei der erfindungsgemäßen Ausgestaltung wird die Auffangvorrichtung stets zusammen mit dem die Hubvorrichtung tragenden Schlitten mitverfahren, so daß die Auffangvorrichtung nur einen geringen Platzbedarf hat. Der bisher von der separaten Abtropfzone benötigte Platzbedarf entfällt und es kann entweder die zuvor von der Abtropfzone eingenommene Fläche mit zusätzlichen Behandlungsstationen belegt werden oder unter Beibehaltung der Anzahl unterschiedlicher Behandlungsstationen kann deren Unterbringung kompakter erfolgen. Außerdem kann der Probenhalter gleichzeitig in Richtung aller Achsen verfahren werden. Damit lassen sich die Transportzeiten wesentlich verringern, was besonders günstig bei parallel laufenden Färbeprogrammen mit teilweise sehr kurzen Verweilzeiten der Präparate in den Behandlungsstationen ist.

Eine kompaktere Unterbringung der Behandlungsstationen hat außerdem den Vorteil, daß der Behandlungsautomat verkleinert werden kann und dadurch die Transportwege verkürzt werden. Dies führt zu einer weiteren Verringerung der Transportzeiten.

Die Auffangvorrichtung ist als Auffangschale ausgebildet, die horizontal relativ zur Hubvorrichtung verfahrbar ist.

Die Auffangschale kann auch einen Flüssigkeitsspeicher umfassen. Dieser kann als Mulde oder/oder als Schwamm ausgebildet sein. Bei der Ausführung als Mulde kann der Flüssigkeitsspeicher von Zeit zu Zeit automatisch entleert werden. Die Ausführung als Schwamm eignet sich dagegen mehr zur manuellen Entleerung. Sie hat aber den Vorteil, daß auch bei schnellen Verfahrbewegungen keine gesammelte Flüssigkeit überschwappen kann.

Vorzugsweise umfaßt die Hubvorrichtung eine Rüttelvorrichtung, die z. B. durch schnelles Ändern der Bewegungsrichtung der Hubvorrichtung realisiert sein kann. Damit kann der Abtropfvorgang beschleunigt und intensiviert werden, so daß auch bei kurzen Verfahrwegen keine Wartezeit einzuhalten ist, bis der Probenhalter der nächsten Behandlungsstation übergeben werden kann.

Das Kuppelelement kann auch mittels eines gesonderten Kuppelantriebs in eine Kuppelstellung und eine Freigabestellung schwenkbar sein. Der Ein- und Auskuppelvorgang läßt sich dadurch beschleunigen.

Nachfolgend wird die Erfindung anhand der Zeichnung erläutert. In dieser zeigen:

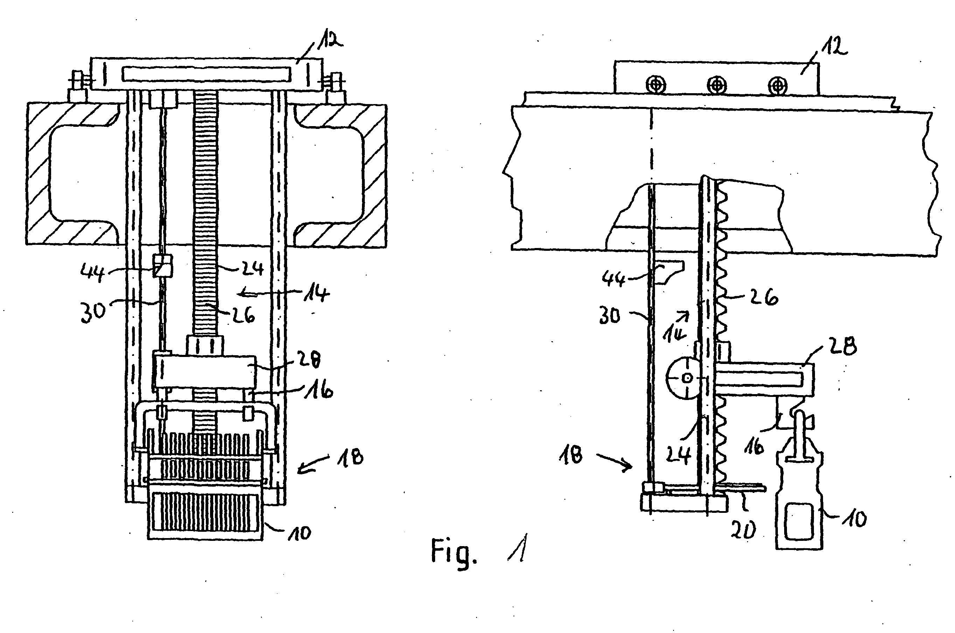

- Fig. 1 - 5: Transportvorrichtungen für Probenhalter in unterschiedlichen Ausgestaltungen.

Die Darstellung der Transportvorrichtungen beschränkt sich hier auf einen horizontal in einer Achse verfahrbaren Schlitten 12 mit einer vertikal verfahrbaren Hubvorrichtung 14 und einem an der Hubvorrichtung 14 angeordneten Kuppelelement 16 für einen Probenhalter 10. Sofern eine zweiachsige Verfahrmöglichkeit in horizontaler Richtung erforderlich ist, kann der dargestellte Schlitten 12 auf einem zweiten Schlitten angeordnet sein, der im rechten Winkel zum ersten Schlitten 12 verfahrbar ist.

Die Hubvorrichtung 14 umfaßt eine vertikale Schiene 24 mit einem Zahnprofil 26 und einen Probenschlitten 28. Der Probenschlitten 28 ist entweder gleitend auf der Schiene 24 gelagert und besitzt dann einen Antrieb mit einem Zahnritzel, das in dem Zahnprofil 26 der Schiene 24 kämmt oder der Probenschlitten 28 ist fest mit der Schiene 24 verbunden und wird zusammen mit dieser mittels eines am horizontal verfahrbaren Schlitten 12 angeordneten Antriebs verfahren. Am Probenschlitten 28 ist ein Kuppelelement 16 für einen Probenhalter 10 befestigt. Das Kuppelelement 16 ist hier als Haken ausgebildet, in dem der Bügel eines Probenhalters 10 ruht.

Außerdem ist eine Auffangvorrichtung 18 für vom Probenhalter 10 abtropfende Flüssigkeit vorgesehen. Die Auffangvorrichtung 18 umfaßt eine neben der vertikalen Schiene 24 befindliche Aufhängung 30, die am unteren Ende eine Auffangschale 20; 22 trägt.

Fig. 1 zeigt in zwei Ansichten eine Ausführung, bei der eine Auffangschale 20 horizontal unter den Probenschlitten 28 verfahrbar ist.

Die Schwenkbewegung der Welle wird über einen Kniehebel oder ein Kulissengetrieben in eine Linearbewegung der Auffangschale 20 umgesetzt wird.

Eine Aufhängung 30 ist hier als Welle mit einem Exzenter 44 ausgebildet, der durch den Probenschlitten 28 ausgelenkt wird.

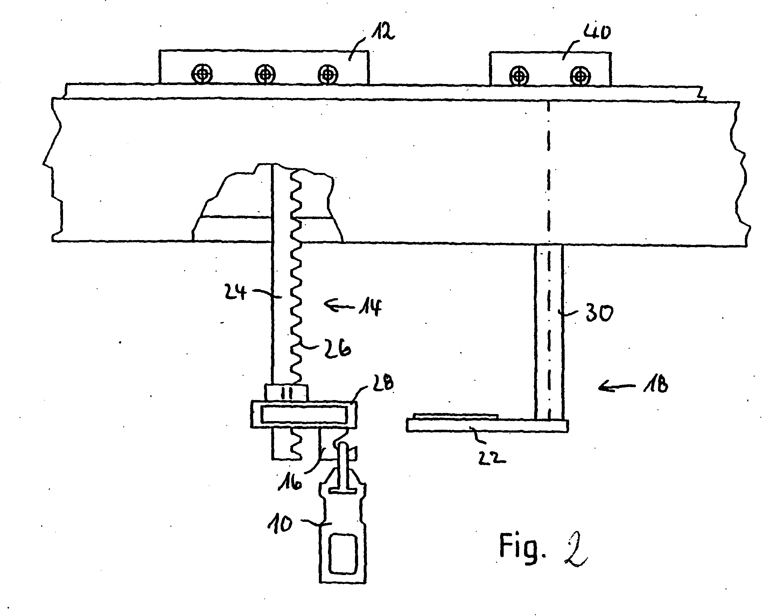

Bei einer in Fig. 2 gezeigten Ausführung ist die Aufhängung 30 mit einer Auffangschale 22 auf einem gesonderten Schlitten 40 angeordnet und horizontal relativ zum Schlitten 12 für die Hubvorrichtung 14 verfahrbar.

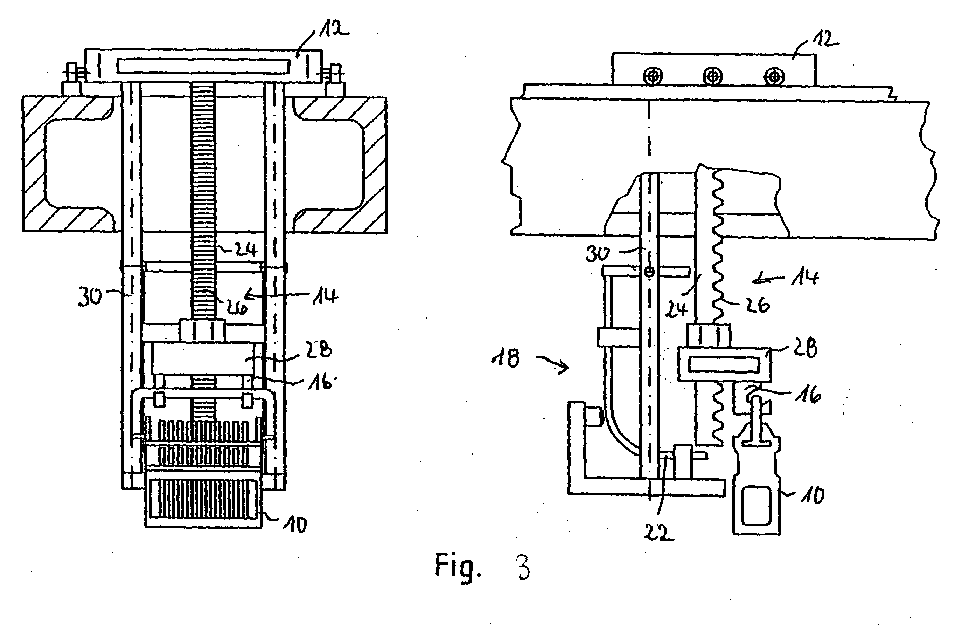

Fig. 3 zeigt in zwei Ansichten eine Ausführung, bei der eine Auffangschale 22 aus flexiblem Material, vorzugsweise Federstahl, besteht und beim Verschieben in die horizontale Richtung umgelenkt wird, so daß sie unter den Probenschlitten 28 gelangt.

Die Auffangschalen 20, 22 umfassen Flüssigkeitsspeicher. Bei den Ausführungen, bei denen die Auffangschale 20, 22 ausschließlich horizontal ausgerichtet ist, reicht hierfür eine Mulde aus.

Eine zusätzliche Rüttelvorrichtung der Hubvorrichtung 14 beschleunigt und intensiviert den Abtropfvorgang.

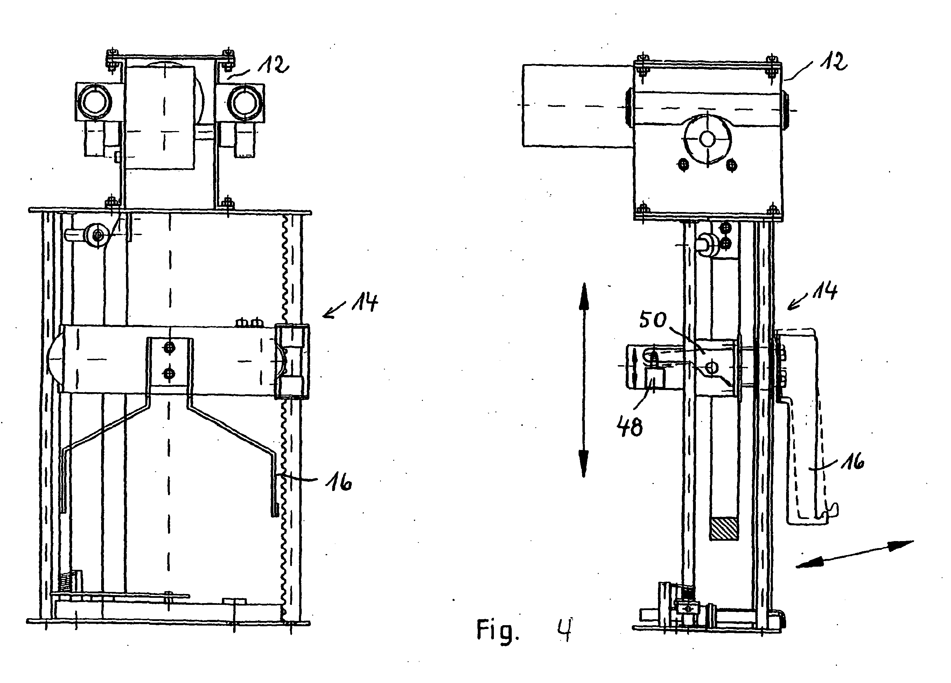

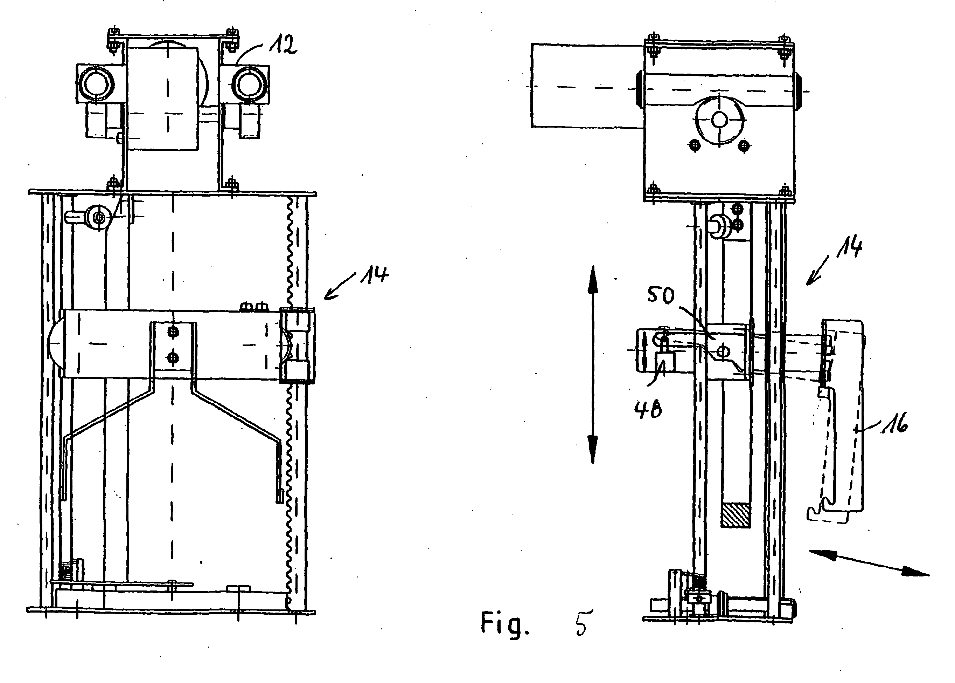

Die Figuren 4 und 5 zeigen zwei Ansichten jeweils zweier Ausführungen, bei denen das Kuppelelement 16 mittels eines gesonderten Kuppelantriebs 48 in eine Kuppelstellung und eine Freigabestellung schwenkbar ist. In der Kuppelstellung liegen die Vertiefung und die Spitze jedes Hakens höher als in der Freigabestellung und zusätzlich ist in der Kuppelstellung noch der Höhenunterschied zwischen der Spitze und der Vertiefung jedes Hakens größer als in der Freigabestellung. Das Kuppelelement 16 ist dazu an einem Arm einer Wippe 50 befestigt, die um eine waagerechte Achse schwenkbar ist. Am gegenüberliegenden Arm der Wippe greift der Kuppelantrieb 48 an. Da der Kuppelantrieb 48 nur kleine Hubbewegungen vornehmen muß, kann er als Elektromagnet ausgebildet sein und daher sehr schnell schalten.

Die beschriebene Transportvorrichtung wird bevorzugt bei Färbeautomaten für histologische und cytologische Färbungen sowie bei Färbungen für die Gel-Elektrophorese und bei Gewebeeinbettautomaten und Gewebeentwässerungsautomaten eingesetzt. Sobald ein Probenhalter 10 mit Präparaten aus einer Behandlungsstation mit flüssigen Reagenzien gehoben wird, wird eine Auffangschale 20, 22 unter den Probenhalter 10 verbracht. Abtropfende Reagenzien gelangen so in die Auffangschale 20, 22. Durch eine Rüttelbewegung des Probenhalters 10 werden noch zusätzlich überflüssige Reagenzien abgeschüttelt, während der Probenhalter 10 zur nächsten Behandlungsstation verfahren wird. Dort angekommen wird die Auffangschale 20, 22 wieder entfernt und der Probenhalter 10 in die nächste Behandlungsstation abgesenkt.

## Patentansprüche

1. Transportvorrichtung für Probenhalter (10) mit medizinischen Präparaten von und zu Behandlungsstationen sowie Entnahme- und Ausgabestationen innerhalb eines Behandlungsautomaten, bestehend aus einem horizontal in wenigstens einer Achse verfahrbaren Schlitten (12) mit einer vertikal verfahrbaren Hubvorrichtung (14) und einem an der Hubvorrichtung (14) angeordneten Kuppelelement (16) für einen Probenhalter (10), eine Auffangvorrichtung (18) für vom Probenhalter (10) abtropfende Flüssigkeit vorhanden ist, daß die Auffangvorrichtung (18) zusammen mit dem die Hubvorrichtung (14) tragenden Schlitten (12) in dem Behandlungsautomaten verfahrbar ist und daß die Auffangvorrichtung (18) und der Probenhalter (10) relativ zueinander so verfahrbar sind, daß die Auffangvorrichtung (18) während des Transports des Probenhalters (10) unter den Probenhalter (10) verbringbar ist, **dadurch gekennzeichnet, daß** die Auffangvorrichtung (18) als Auffangschale (20, 22) ausgebildet ist, die horizontal relativ zur Hubvorrichtung (14) verfahrbar ist.

2. Vorrichtung nach Anspruch 1, **dadurch gekennzeichnet, daß** die Auffangschale (20; 22) einen Flüssigkeitsspeicher umfaßt.

3. Vorrichtung nach Anspruch 2, **dadurch gekennzeichnet, daß** der Flüssigkeitsspeicher als Mulde oder als Schwamm ausgebildet ist.

4. Vorrichtung nach einem der Ansprüche 1 bis 3, **dadurch gekennzeichnet, daß** die Hubvorrichtung (14) eine Rüttelvorrichtung umfaßt.

5. Vorrichtung nach einem der Ansprüche 1 bis 4, **dadurch gekennzeichnet, daß** das Kuppelelement (16) mittels eines gesonderten Kuppelantriebs (48) in eine Kuppelstellung und eine Freigabestellung schwenkbar ist.

## Claims

1. A conveying device for conveying sample holders (10) with medical preparations to and from processing stations and extraction and dispensing stations inside an automated processing installation, consisting of a carriage (12) which is displaceable horizontally along at least one axis and has a vertically displaceable lifting device (14) and a coupling member (16) for a sample holder (10) arranged on the lifting device (14), wherein a collecting device (18) for liquid dripping from the sample holder (10) is present, the collecting device (18) is displaceable in the automated processing installation together with the carriage (12) carrying the lifting device (14), and wherein the collecting device (18) and the sample holder (10) may be displaced relative to one another in such a way that the collecting device (18) may be brought under the sample holder (10) during conveying of the sample holder (10), **characterised in that** the collecting device (18) takes the form of a drip pan (20, 22) which may be displaced horizontally relative to the lifting device (14).

2. A device according to claim 1, **characterised in that** the drip pan (20; 22) comprises a liquid retainer.

3. A device according to claim 2, **characterised in that** the liquid retainer takes the form of a trough or a sponge.

4. A device according to one of claims 1 to 3, **characterised in that** the lifting device (14) comprises a vibratory device.

5. A device according to one of claims 1 to 4, **characterised in that** the coupling member (16) may be swivelled by means of a separate coupling drive (48) into a coupling position and a release position.

## Revendications

1. Dispositif de transport pour porte-échantillons (10) contenant des échantillons médicaux vers des postes de traitement et en provenant, et des postes d'échantillonnage et des postes de distribution à l'intérieur d'un automate de traitement, comportant un chariot (12) qui peut se déplacer horizontalement le long d'au moins un axe et qui porte un mécanisme élévateur (14) pouvant se déplacer verticalement et sur lequel est disposé un élément de couplage (16) destiné à un porte-échantillon (10), un dispositif collecteur (18) pour recueillir le liquide s'égouttant du porte-échantillon (10), le dispositif collecteur (18) pouvant se déplacer avec le chariot (12) qui porte le mécanisme élévateur (14) dans l'automate de traitement, le dispositif collecteur (18) et le porte-échantillon (10) pouvant se déplacer relativement l'un par rapport à l'autre de telle manière que le dispositif collecteur (18) peut se déplacer pendant le transport du porte-échantillon (10) sous celui-ci, **caractérisé en ce que** le dispositif collecteur (18) est formé comme une cuvette collectrice (20 ; 22) qui peut se déplacer horizontalement par rapport au mécanisme élévateur (14).

2. Dispositif de transport selon la revendication 1, **caractérisé en ce que** la cuvette collectrice (20 ; 22) contient un réservoir de liquide.

3. Dispositif de transport selon la revendication 2, **caractérisé en ce que** le réservoir de liquide a la forme d'une dépression ou d'une éponge.

4. Dispositif de transport selon l'une des revendications 1 à 3, **caractérisé en ce que** le mécanisme élévateur (14) comprend un dispositif vibrant.

5. Dispositif de transport selon l'une des revendications 1 à 4, **caractérisé en ce que** l'élément de couplage (16) peut pivoter au moyen d'un entraînement de couplage séparé (48) dans une position de couplage et dans une position de déblocage.
